# EUROPEAN PATENT APPLICATION

(11) **EP 4 349 424 A1**
(43) Date of publication of application: **10.04.2024**
(21) Application number: 23199085.4
(22) Date of filing: 22.09.2023
(51) Int. Cl.: A63B 21/005, A63B 22/02, A63B 24/00, A63B 22/20

(54) **RESISTANCE-ADJUSTABLE SELF-POWER-GENERATING TREADMILL**

(30) Priority: 05.10.2022 TW 111137912
(71) Applicant: Alatech Technology Limited, Taichung City (TW)
(72) Inventor: CHEN, Yu Hsiang, Taichung City (TW)
(74) Representative: Viering, Jentschura & Partner mbB Patent- und Rechtsanwälte

(57) **Abstract**

A resistance-adjustable self-power-generating treadmill includes a chassis; a power generator; a belt driving device including two rollers, a circulating running belt, and a power transmission unit; a controller electrically connected with the power generator; a battery electrically connected with the controller; a handlebar; and display and control unit, which is mounted on the handlebar to allow a user to watch messages and to control, through touching the display and control unit, the controller to adjust the power generation amount of the power generator. Through adjusting the power generation amount of the power generator, the resisting force that is applied from the power generator to the circulating running belt is also controllable.

## Description

### BACKGROUND OF THE INVENTION

### (a) Technical Field of the Invention

The present invention relates generally to a treadmill, and more particularly to a resistance-adjustable self-power-generating treadmill.

### (b) Description of the Prior Art

A treadmill includes a circulating running belt driven by electrical power to allow a user to jog or run on the circulating running belt to achieve the effect of body fitting.

However, regular treadmills consume electrical power to drive the circulating running belt to allow the user to jog or run thereon, and therefore, generating kinetic energy. Such a way, however, not only requires consumption of electrical power, but is also ineffective in utilizing the kinetic energy generated by the user. Consequently, the energy utilization is apparently very poor.

Thus, some known treadmills that are available in the market use the kinetic energy generated with user running to drive the circulating running belt to circulate, and the running belt is coupled to a power generator to generate electrical power to achieve an effect of self-power generation. However, such a kind of self-power-generating treadmills does not allow for varying the resistance value and thus does not suit for different individuals, making it hard to prevail in the market. Further, self-power-generating treadmills of which the resistance is adjustable are known, and this is achieved by adjusting the slope to be higher or lower, or adding resisting devices (such as magnetic attraction devices). This makes the kind of self-power-generating treadmills suffering deficiencies of numerous components, high fabrication cost, complicated operation, and being hard to maintain and repair.

### SUMMARY OF THE INVENTION

In view of the above, to alleviate the deficiencies of the known self-power-generating treadmill of the prior art that the components are numerous, the fabrication cost is high, the operation is complicated, and maintenance and repair are hard, the present invention provides a resistance-adjustable self-power-generating treadmill, which comprises: a chassis; a power generator mounted on the chassis to convert input power into electrical power for outputting; a belt driving device including two rollers, a circulating running belt, and a power transmission unit, the two rollers being rotatably mounted on the chassis, the circulating running belt being looped around the two rollers and is acted upon by an external force to move, in a circulating manner, in order to drive the rollers to rotate, the power transmission unit being coupled between one of the rollers and the power generator to transfer rotating power of the rollers to the power generator; a controller mounted on the chassis and electrically connected with the power generator to have electrical power generated by the power generator fed into the controller, the controller being operable to control a power generation amount of the power generator, the control of the power generation amount of the power generator by the controller being achieved by directly setting a power of the power generator between a maximum power generation amount and a minimum power generation amount of the power generator in order to set a resistance of the circulating running belt; a battery mounted on the chassis and electrically connected with the controller so that the controller transmits the electrical power generated by the power generator into the battery to have the electrical power accumulated and stored in the battery and to allow the battery to supply electrical power for operation of the controller; a handlebar connected, in an erected manner, on the chassis; and a display and control unit mounted on the handlebar to allow a user to watch messages and to control, through touching the display and control unit, the controller to adjust the power generation amount of the power generator, so that through adjusting the power generation amount of the power generator, the resistance that is applied from the power generator to the circulating running belt is controlled, and the controller is operable to directly set the power of the power generator to set the resistance of the circulating running belt.

### BRIEF DESCRIPTION OF THE DRAWINGS

FIG. 1 is a perspective view, in an assembled form, showing a preferred embodiment of the present invention.
FIG. 2 is a perspective view, in an assembled form, taking from a different view angle to show the preferred embodiment shown in FIG. 1.
FIG. 3 is a block diagram illustrating electrical power transmission for the embodiment shown in FIG. 1.
FIG. 4 is a table showing data of the embodiment shown in FIG. 1.

### DETAILED DESCRIPTION OF THE PREFERRED EMBODIMENTS

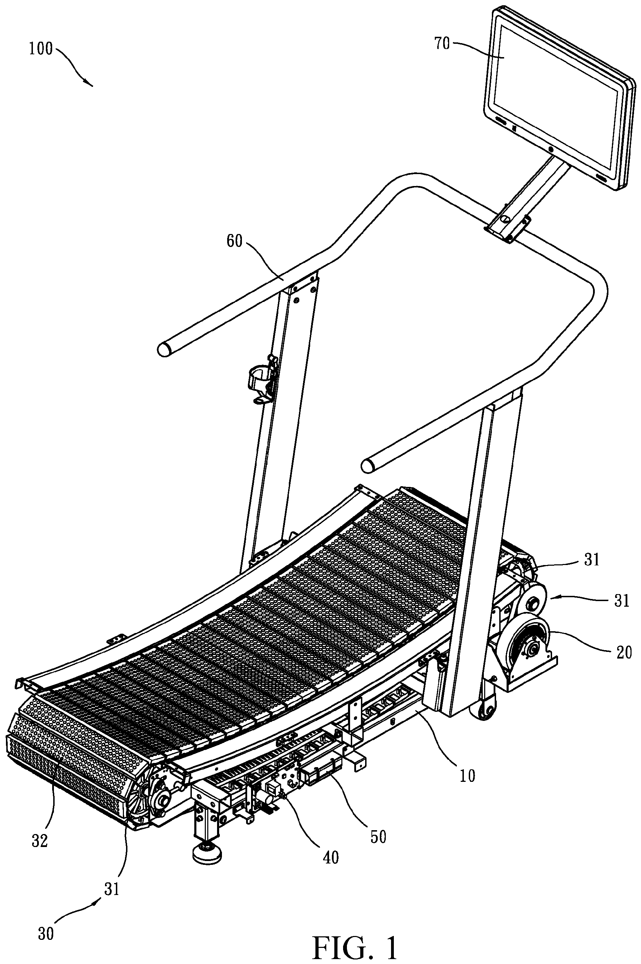

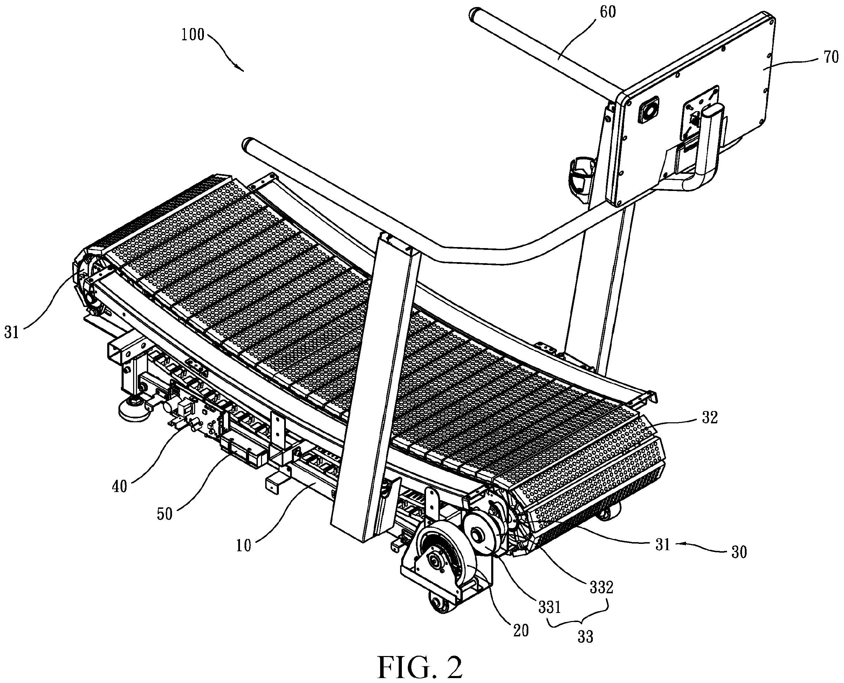

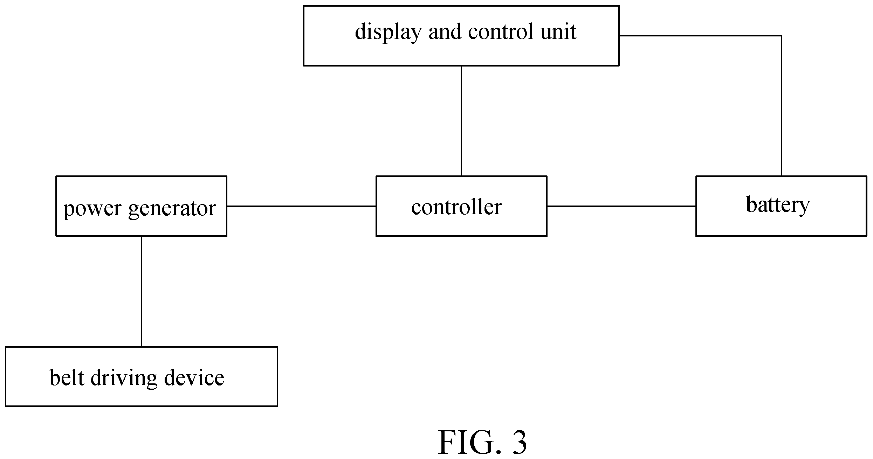

Referring to FIGS. 1-4, the present invention provides, in a preferred embodiment, a resistance-adjustable self-power-generating treadmill 100, which mainly comprises a chassis 10, a power generator 20, a belt driving device 30, a controller 40, a battery 50, a handlebar 60, and a display and control unit 70.

Referring to FIGS. 1-3, the chassis 10 is securely positionable on a ground surface.

Referring to FIGS. 1-3, the power generator 20 is mounted on the chassis 10 to convert input power to electrical power for outputting.

Referring to FIGS. 1-3, the belt driving device 30 comprises two rollers 31, a circulating running belt 32, and a power transmission unit 33. The two rollers 31 are rotatably mounted on the chassis 10 and are acted upon by external forces to rotate in situ, and the two rollers 31 are spaced from each other by a distance. The circulating running belt 32 is an annular band looped around the two rollers 31 to allow a user to run thereon. The power transmission unit 33 is coupled between one of the rollers 31 and the power generator 20 to transfer rotating power of the roller 31 to the power generator 20. In the embodiment, the power transmission unit 33 comprises a pulley 331 and a belt 332. The pulley 331 is coaxially connected with the roller 31, and the belt 332 connects between the pulley 331 and an input axle (not shown) of the power generator 20.

Referring to FIGS. 1-3, the controller 40 is mounted on the chassis 10 and is electrically connected with the power generator 20 to have electrical power generated by the power generator 20 fed into the controller 40, and the controller 40 is operable to control an amount of electrical power generated by the power generator 20.

Referring to FIGS. 1-3, the battery 50 is mounted on the chassis 10 and is electrically connected with the controller 40 to have the controller 40 transmitting the electrical power generated by the power generator 20 into the battery 50 so that the electrical power is accumulated and stored in the battery 50, and also to have the battery 50 supplying electrical power necessary for operation of the controller 40.

Referring to FIGS. 1-3, the handlebar 60 is connected, in an erected manner, on the chassis 10 to allow the hands of the user to hold and grip.

Referring to FIGS. 1-3, the display and control unit 70 comprises a touch screen, which is mounted on the handlebar 60 to allow the user to watch messages and to control, through touching the display and control unit 70, the amount of electrical power generated by the power generator 20.

Thus, the above provides an introduction to the components of the resistance-adjustable self-power-generating treadmill 100 provided according to the preferred embodiment of the present invention, and the assembly thereof, and in the following, the operation feature will be described.

When a user operates the present invention, firstly, the feet step up and stand on the circulating running belt 32, and a finger touches an item of power generation amount on the display and control unit 70, and then, the user starts jogging or running on the circulating running belt 32 to drive the circulating running belt 32 to move in a circulating manner and also to drive the rollers 31 to rotate in synchronization therewith, so that the rollers 31 drives the pulley 331 and the belt 332 of the power transmission unit 33 to synchronously operate to feed rotating power into the power generator 20, to thereby allow the power generator 20 to generate electrical power, and to have the electrical power transmitted by means of the controller 40 into the battery 50 for accumulation and storage, and meanwhile, electrical power is supplied from the battery 50 to provide electricity necessary for the operation of the controller 40 and the display and control unit 70, so that no external power supply is necessary and an effect of self-power generation is achieved.

In the present invention, the display and control unit 70 comprises multiple option items of power generation amount for selection by the user. With the rotating speed of the power generator becoming higher or lower, the electrical power generated thereby becomes increased or decreased, and the higher the amount of electrical power generated by the power generator, the greater the resistance of the power generator itself, meaning a greater force must be applied to enable the power generator achieves the desired amount of power generation. Consequently, the present invention utilizes such a property of the power generator to allow the user to vary the resisting effect transmitted from the power generator 20 to the circulating running belt 32 at the same time of operating the items of power generation amount.

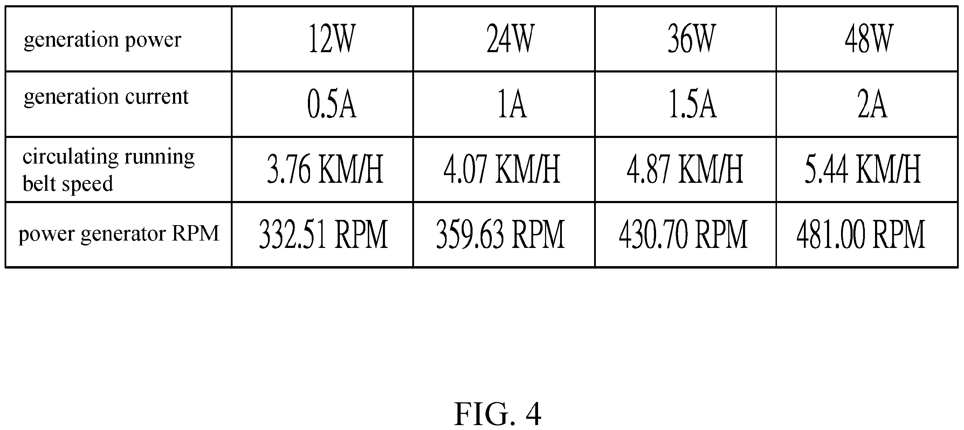

Further, through precise control, the user is allowed, provided that the power generator 20 has a sufficient rotating speed, to determine a current amount of power generation (namely the resisting force). For example, as shown in FIG. 4, if the user wishes to have a greater resisting force, then the power generation amount can be set as 48W, so that the controller 40 may control the power generator 20 to reach the maximum power generation amount; and if the user wishes to run easily (meaning the resisting force is smaller), then the power generation amount can be set as 12W, and the controller 40 makes the power generator 20 to reach the minimum power generation amount. In other words, the user may operate, through selection, the option items of the display and control unit 70 to have the controller 40 controlling the power generator 20 in such a way as to determine the power generation amount and the level of resistance.

Next, in addition to being supplied for operation of the controller 40 and the display and control unit 70, the electrical power stored in the battery 50 can also be fed to other loadings to enhance the performance of the present invention.

As such, the present invention provides that an effect of determining the level of resistance is achieved through controlling the power generation amount of the power generator, and no excessively large quantity of parts or devices is required, so as to achieve effects of reducing parts, lowering fabrication cost, simple operation, and easy maintenance.

## Claims

1. A resistance-adjustable self-power-generating treadmill, comprising:
a chassis;
a power generator, which is mounted on the chassis to convert input power into electrical power for outputting;
a belt driving device, which comprises two rollers, a circulating running belt, and a power transmission unit, wherein the two rollers are rotatably mounted on the chassis, and the circulating running belt is looped around the two rollers and is adapted to be acted upon by an external force to move, in a circulating manner, in order to drive the rollers to rotate, and the power transmission unit is coupled between one of the rollers and the power generator to transfer rotating power of the rollers to the power generator;
a controller, which is mounted on the chassis and is electrically connected with the power generator to have electrical power generated by the power generator fed into the controller, the controller being operable to control a power generation amount of the power generator, wherein the control of the power generation amount of the power generator by the controller is achieved by directly setting a power of the power generator between a maximum power generation amount and a minimum power generation amount of the power generator in order to set a resistance level of the circulating running belt;
a battery, which is mounted on the chassis and is electrically connected with the controller so that the controller transmits the electrical power generated by the power generator into the battery to have the electrical power accumulated and stored in the battery and to allow the battery to supply electrical power for operation of the controller;
a handlebar, which connected, in an erected manner, on the chassis; and
a display and control unit, which is mounted on the handlebar and adapted to allow a user to watch messages and to control, through touching the display and control unit, the controller to adjust the power generation amount of the power generator, so that through adjusting the power generation amount of the power generator, the resistance level that is applied from the power generator to the circulating running belt is controlled, wherein the controller is operable to directly set the power of the power generator to set the resistance level of the circulating running belt.

2. The resistance-adjustable self-power-generating treadmill according to claim 1, wherein the two rollers are spaced from each other by a distance.

3. The resistance-adjustable self-power-generating treadmill according to claim 1, wherein the circulating running belt comprises an annular band.

4. The resistance-adjustable self-power-generating treadmill according to claim 1, wherein the power transmission unit comprises a pulley and a belt, the pulley being coaxially connected with the one of the rollers, the belt being connected between the pulley and an input axle of the power generator.

5. The resistance-adjustable self-power-generating treadmill according to claim 1, wherein the display and control unit comprises a touch screen.
